# EUROPEAN PATENT APPLICATION

(11) **EP 4 783 018 A1**
(43) Date of publication of application: **29.07.2026**
(21) Application number: 26152648.7
(22) Date of filing: 19.01.2026
(51) Int. Cl.: G06F 13/42

(54) **INFORMATION PROCESSING APPARATUS, INFORMATION PROCESSING METHOD, PROGRAM AND STORAGE MEDIUM**

(30) Priority: 23.01.2025 JP 2025009903
(71) Applicant: Canon Kabushiki Kaisha, Tokyo, 146-8501 (JP)
(72) Inventor: OKADA, Yuki, Tokyo, 146-8501 (JP)
(74) Representative: Canon Europe Limited

(57) **Abstract**

An information processing apparatus includes a connection unit configured to establish communicable connection with an external apparatus through a wired connection, a disconnection processing unit configured to, in response to a moving image size changing instruction, perform processing for disconnecting communication with the external apparatus in a state where the connection unit and the external apparatus are wired-connected, a changing unit configured to change a moving image size based on the moving image size changing instruction; and a connection processing unit configured to perform connection processing to communicate with the external apparatus in the state where the connection unit and the external apparatus are wired-connected.

## Description

### Technical Field

The present disclosure relates to an information processing apparatus, an information processing method, a program, and a storage medium.

### BACKGROUND

An imaging apparatus including a function of dynamically changing imaging setting values has been developed. Japanese Patent Laid-Open Publication No. 2020-5190 describes a configuration in which the imaging setting values of the imaging apparatus are updated using a learning device at the time of starting and interrupting imaging. Japanese Patent Laid-Open Publication No. 2020-118863 describes a configuration in which a use order and a plurality of imaging setting values of the imaging apparatus are previously stored, and the imaging setting values are read out based on the use order and reflected on the imaging apparatus.

The imaging apparatus is connected to a host apparatus by, for example, a universal serial bus (USB), and a USB video class (UVC) function of the imaging apparatus is used in some cases. In the existing techniques described in Japanese Patent Laid-Open Publication No. 2020-5190 and Japanese Patent Laid-Open Publication No. 2020-118863, in such a situation, it is difficult to change setting of a size of a distribution moving image distributed from the imaging apparatus after the USB connection. The reason is as follows.

When the imaging apparatus is USB-connected to the host apparatus, the imaging apparatus transmits a descriptor in which apparatus information on the imaging apparatus is described, in enumeration between the imaging apparatus and the host apparatus. The descriptor transmitted from the imaging apparatus to the host apparatus includes information on a supported USB standard, information on a serial number, and the like, and also includes information on the distribution moving image size transmitted from the imaging apparatus to the host apparatus during use of the UVC function. The above-described descriptor including the information on the distribution moving image size is transmitted from the imaging apparatus to the host apparatus at the time of performing enumeration when the USB connection is established. Therefore, in a case where setting of the distribution moving image size of the imaging apparatus is changed after the USB connection, the user is required to unplug a USB cable connecting the imaging apparatus and the host apparatus to perform disconnection once, and to connect the USB cable again. It takes a lot of effort.

In addition, in a case where the setting of the distribution moving image size of the imaging apparatus is changed but the user does not perform USB reconnection, a moving image of a distribution moving image size different from a distribution moving image size expected by the host apparatus is transmitted from the imaging apparatus. At this time, noise, flickering, and the like may occur on the distribution moving image.

### SUMMARY

The present disclosure is directed to an information processing apparatus that can, when setting of a moving image size is changed, distribute a moving image of the changed moving image size without requiring a user to attach/detach a cable, thereby achieving excellent usability and high convenience.

The present disclosure in its first aspect provides an information processing apparatus as specified in claim 1. Optional features are specified in claims 2 to 7. The present disclosure in its second aspect provides an information processing method as specified in claim 8. The present disclosure in its third aspect provides a program as specified in claim 9. The present disclosure in its fourth aspect provides a computer-readable medium as specified in claim 10. Optional features of the second, third, and fourth aspects of the disclosure are specified in or derived from claims 2 to 7.

Features of the present disclosure will become apparent from the following description of embodiments with reference to the attached drawings. The following description of embodiments is described by way of example.

### BRIEF DESCRIPTION OF THE DRAWINGS

Fig. 1 is a schematic diagram illustrating a configuration and functions of an imaging apparatus according to a first embodiment.
Figs. 2A and 2B are perspective views each illustrating an appearance of the imaging apparatus according to the first embodiment.
Fig. 3 is a schematic diagram illustrating a configuration and functions of a host apparatus according to the first embodiment.
Fig. 4 is a schematic diagram illustrating a configuration and functions of a control unit of the imaging apparatus according to the first embodiment.
Fig. 5 is a sequence diagram illustrating processing when a distribution moving image size of the imaging apparatus is changed during use of a Universal serial bus Video Class (UVC) function, by an imaging system according to the first embodiment.
Fig. 6 is a schematic diagram illustrating a descriptor transmitted from the imaging apparatus to the host apparatus according to the first embodiment.
Fig. 7 is a flowchart illustrating processing by the imaging apparatus when the imaging apparatus and the host apparatus are connected by a USB, and the distribution moving image size of the imaging apparatus is changed during use of the UVC function according to the first embodiment.
Fig. 8 is a schematic diagram illustrating a configuration and functions of a control unit of an imaging apparatus according to a second embodiment.
Fig. 9 is a sequence diagram illustrating USB communication disconnection processing by an imaging system according to the second embodiment.
Fig. 10 is a schematic diagram illustrating a state where a notification from a notification unit is displayed on a display screen of a display unit according to the second embodiment.

### DESCRIPTION OF THE EMBODIMENTS

### -Basic Configuration of Information Processing Apparatus According to Present Disclosure-

Before various embodiments are specifically described, a basic configuration of an information processing apparatus according to the present disclosure is described.

The information processing apparatus according to the present disclosure includes a connection unit, a disconnection processing unit, a changing unit, and a connection processing unit. The connection unit is a unit configured to establish communicable connection with an external apparatus through wired connection. The disconnection processing unit performs, in response to a moving image size changing instruction, processing for disconnecting communication with the external apparatus in a state where the connection unit and the external apparatus are wired-connected. The changing unit changes a moving image size based on the instruction. The connection processing unit performs connection processing to be able to communicate with the external apparatus in the state where the connection unit and the external apparatus are wired-connected. For example, a universal serial bus (USB) standard is used for the above-described wired connection. The information processing apparatus includes an imaging unit capturing an image, thereby functioning as an imaging apparatus.

When the user issues the moving image size changing instruction, the information processing apparatus performs, in a state of being wired-connected to the external apparatus, the processing for disconnecting communication with the external apparatus, changes the moving image size, and performs the connection processing to communicate with the external apparatus without requiring attachment/detachment of a connection cable and the like. This realizes the information processing apparatus that can distribute a moving image of the changed moving image size to the external apparatus without requiring reconnection of the cable, thereby achieving excellent usability and high convenience.

### -Specific Description of Various Embodiments-

Various embodiments of the present disclosure are described in detail below with reference to drawings. The various embodiments described below do not limit the disclosure according to Claims. A plurality of features is described in the various embodiments, but all of the plurality of features are not necessarily essential, and the plurality of features may be optionally combined. Each of the embodiments of the present disclosure described below can be implemented solely or as a combination of a plurality of the embodiments or features thereof where necessary or where the combination of elements or features from individual embodiments in a single embodiment is beneficial. In the drawings, the same or similar components are denoted by the same reference numerals, and repetitive description is omitted. Details of dimensions and configurations described in the embodiments are not limited to those described in the specification and drawings.

### (First Embodiment)

In a first embodiment, an imaging system in which an imaging apparatus and a host apparatus are connected by, for example, a USB cable is described. The imaging apparatus according to the present embodiment is an information processing apparatus that includes an imaging unit, thereby functioning as the imaging apparatus.

### <Configuration of Imaging Apparatus 100>

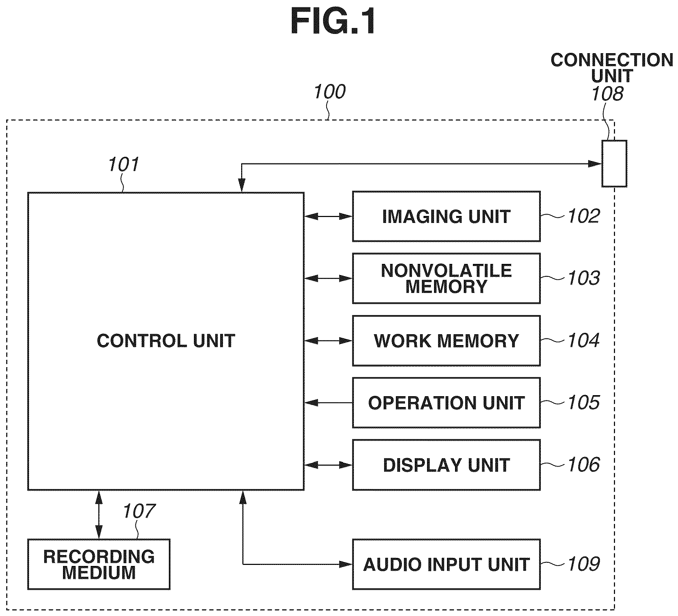

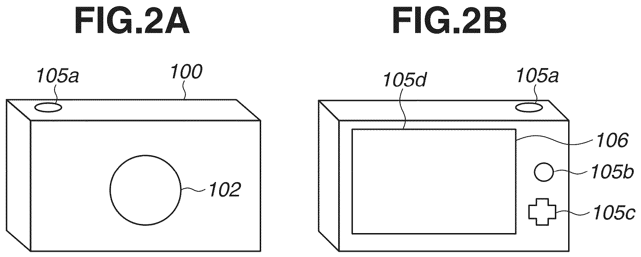

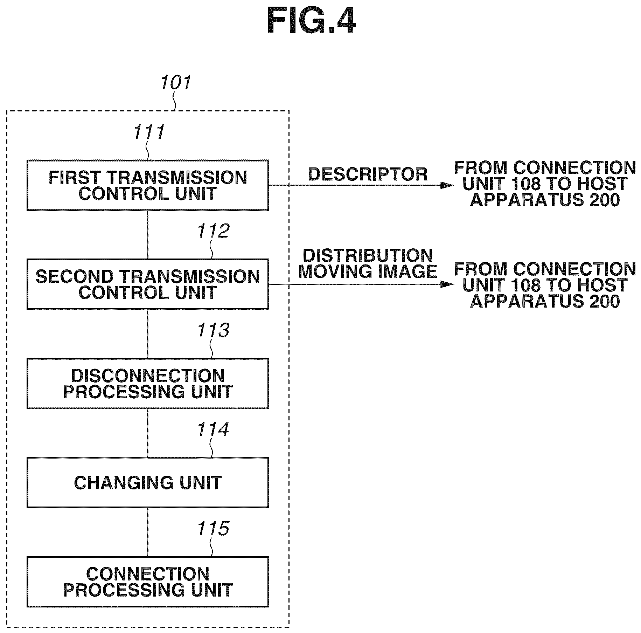

Fig. 1 is a schematic diagram illustrating a configuration and functions of an imaging apparatus 100 according to the present embodiment. Figs. 2A and 2B are perspective views each illustrating an appearance of the imaging apparatus 100, where Fig. 2A illustrates a front surface side, and Fig. 2B illustrates a rear surface side. Fig. 4 is a schematic diagram illustrating a configuration and functions of a control unit 101 of the imaging apparatus 100.

In the present embodiment, the imaging apparatus that can capture an image such as a still image or a moving image (hereinafter, image) is described as an example of a communication apparatus; however, the communication apparatus is not limited thereto. The communication apparatus may be, for example, an information processing apparatus with a camera function such as a tablet device or a personal computer, a monitoring camera, or a medical camera.

The control unit 101 is a central processing unit (CPU) totally controlling the entire imaging apparatus 100, and realizes communication processing and control processing described below by executing programs stored in a nonvolatile memory 103 described below. In place of control of the entire apparatus by the control unit 101, a plurality of pieces of hardware may control the entire apparatus by sharing the processing.

As illustrated in Fig. 4, the control unit 101 includes a first transmission control unit 111, a second transmission control unit 112, a disconnection processing unit 113, a changing unit 114, and a connection processing unit 115. These units are realized by the CPU of the control unit 101.

The first transmission control unit 111 transmits a descriptor to an external apparatus (host apparatus in present embodiment) from a connection unit 108 through the USB cable. The second transmission control unit 112 transmits, in response to a distribution moving image transmission request from the external apparatus, a distribution moving image after a distribution moving image size is changed, from the connection unit 108 to the external apparatus through the USB cable. The disconnection processing unit 113 performs, in response to a disconnection request of the USB communication with the external apparatus, USB communication disconnection processing in a state where the connection unit 108 of the imaging apparatus 100 and a connection unit of the external apparatus are wired-connected by the USB cable. The changing unit 114 performs, in response to a distribution moving image size change instruction by user operation, processing for changing setting of the distribution moving image size. The connection processing unit 115 performs, in response to a connection control request of a USB controller, connection processing for enabling communication with the external apparatus in the state where the connection unit 108 of the imaging apparatus 100 and the connection unit of the external apparatus are wired-connected by the USB cable.

An imaging unit 102 includes a lens unit including a zoom lens and a focus lens, and a shutter having an aperture function. The imaging unit 102 further includes an imaging element for converting an object image into an electric signal, such as a charge coupled device (CCD) element or a complementary metal-oxide semiconductor (CMOS) element, and an analog-to-digital (A/D) converter converting an analog image signal output from the imaging element into a digital signal. Under the control of the control unit 101, the imaging unit 102 converts object image light formed by the lenses included in the imaging unit 102, into an electric signal by the imaging element, performs noise reduction processing and the like on the electric signal, and outputs image data including digital signals. The image data output from the imaging unit 102 is recorded in a recording medium 107 in accordance with a Design rule for Camera File system (DCF) standard.

The nonvolatile memory 103 is an electrically erasable/recordable memory, and for example, an electrically erasable programmable read-only memory (EEPROM) is used. Constants for operation of the control unit 101, programs, and the like are recorded in the nonvolatile memory 103. The programs indicate programs for performing communication processing and control processing described below in the present embodiment.

A work memory 104 is used as a work area for loading the constants and variables for operation of the control unit 101, the programs read out from the nonvolatile memory 103, and the like. The work memory 104 is also used as a buffer memory for temporarily holding the image data captured by the imaging unit 102, and an image display memory of a display unit 106.

An operation unit 105 includes operation members such as various kinds of switches, buttons, and a touch panel, for receiving various kinds of operation from the user. For example, as illustrated in Figs. 2A and 2B, the operation unit 105 includes a shutter button 105a for capturing an image, a reproduction button 105b for reproducing a captured image, and a four-direction key 105c including up, down, left, and right buttons for performing various kinds of settings of the camera. Further, a touch panel 105d formed integrally with the display unit 106 described below is included in the operation unit 105.

When the shutter button 105a is operated halfway, namely, is half pressed (imaging preparation instruction), the shutter button 105a is turned on and generates a first shutter switch signal SW1. Upon receiving the first shutter switch signal SW1, the control unit 101 controls the imaging unit 102 to start operation of autofocus (AF) processing, autoexposure (AE) processing, auto-white balance (AWB) processing, electronic flash (EF) (preliminary flash emission) processing, and the like. When the shutter button 105a is operated completely, namely, is fully pressed (imaging instruction), the shutter button 105a is turned on to generate a second shutter switch signal SW2.

Upon receiving the second shutter switch signal SW2, the control unit 101 starts operation of a series of imaging processes from signal readout from the imaging unit 102 to writing of image data in the recording medium 107.

The display unit 106 displays a view finder image in imaging, a captured image, characters for dialogical operation, and the like. The display unit 106 is a display device of a liquid crystal display, an organic electroluminescent (EL) display, or the like. The display unit 106 may be integrated with the imaging apparatus 100, or may be an external device connected to the imaging apparatus 100. It is sufficient for the imaging apparatus 100 to have a function of establishing connection with the display unit 106 and controlling display of the display unit 106. Further, as in the present embodiment, the display unit 106 can display a screen received from the external apparatus connected to the imaging apparatus 100.

The image data output from the imaging unit 102 is recorded in the recording medium 107, or an image file already recorded by the control unit 101 is read out from the recording medium 107. The recording medium 107 may be a memory card, a hard disk drive, or the like mounted on the imaging apparatus 100, or may be a flash memory or a hard disk drive incorporated in the imaging apparatus 100. It is sufficient for the imaging apparatus 100 to have at least a unit for accessing the recording medium 107.

The connection unit 108 is an interface for establishing communicable connection with the external apparatus such as a host apparatus 200 described below. The imaging apparatus 100 according to the present embodiment can exchange data with the external apparatus through the connection unit 108. For example, the imaging apparatus 100 can transmit the image data output from the imaging unit 102 to the external apparatus through the connection unit 108. In the present embodiment, the connection unit 108 includes an interface for performing wired communication with the external apparatus in accordance with a USB standard. The control unit 101 controls the connection unit 108 to realize communication with the external apparatus.

In the present embodiment, the connection unit 108 includes a USB connector for the USB cable, and a transceiver/receiver of a USB device controller for transmitting/receiving data, for example. Other components of the USB device controller are included in the control unit 101. However, the connection unit 108 may include all components of the USB device controller.

An audio input unit 109 receives audio data from outside. An external device such as a microphone may be connected to the audio input unit 109. For example, the imaging apparatus 100 according to the present embodiment transmits the audio data received by the audio input unit 109 to the connection unit 108 through the control unit 101. The connection unit 108 communicates with the host apparatus 200, and transmits the audio data received from the control unit 101 to the host apparatus 200.

### <Configuration of Host Apparatus 200>

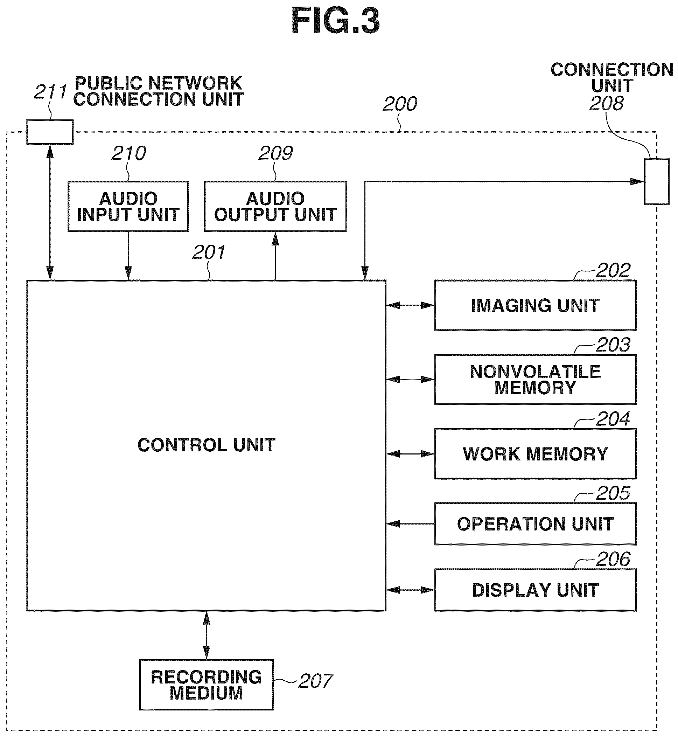

Fig. 3 is a schematic diagram illustrating a configuration and functions of the host apparatus 200 according to the present embodiment.

In the present embodiment, a personal computer is described as an example of the host apparatus 200 that is the external apparatus; however, the host apparatus 200 is not limited thereto. The host apparatus 200 may be, for example, a smartphone that is one kind of a mobile phone, a tablet device, a printer, a television, or a wearable computer such as a wristwatch-type smartwatch or eyeglass-type smart-glasses.

The host apparatus 200 according to the present embodiment includes a control unit 201, an imaging unit 202, a nonvolatile memory 203, a work memory 204, an operation unit 205, a display unit 206, a recording medium 207, a connection unit 208, an audio output unit 209, an audio input unit 210, and a public network connection unit 211. Basic functions of these units are similar to the basic functions of the units in the imaging apparatus 100, and detailed description thereof is omitted.

An operating system (OS) that is basic software executed by the control unit 201, and applications cooperating with the OS to realize application functions are recorded in the nonvolatile memory 203. Further, in the present embodiment, a camera application for realizing communication processing and control processing with the imaging apparatus 100 is stored in the nonvolatile memory 203.

The connection unit 208 includes a USB communication interface for communicating with an external apparatus such as the imaging apparatus 100. The control unit 201 controls the connection unit 208 to realize USB communication with the external apparatus. The connection unit 208 may be directly connected to the imaging apparatus 100, or may be connected to the imaging apparatus 100 through an external apparatus. As a protocol for communicating data, for example, USB Video Class (UVC) and USB Audio Class (UAC) that are kinds of the USB standard can be used.

The audio output unit 209 can receive audio data input by the audio input unit 210 through the control unit 201, and output the audio data to outside through an audio output device such as a speaker. The audio input unit 210 can be connected to an audio input device such as a microphone to receive audio, and transmit received audio data to the control unit 201.

The public network connection unit 211 is an interface used when wireless communication through a wide area network (WAN) of 3rd generation (3G)/long term evolution (LTE) is performed. The host apparatus 200 can make a telephone call or perform data communication with another apparatus through the public network connection unit 211. At the time of making a telephone call, the control unit 201 inputs and outputs audio signals through the audio input unit 210 and the audio output unit 209. In the present embodiment, the public network connection unit 211 may use not only 3G and LET but also the other communication methods such as Worldwide Interoperability for Microwave Access (WiMAX), Asymmetric Digital Subscriber Line (ADSL), and Fiber to the Home (FTTH). The connection unit 208 and the public network connection unit 211 can be both realized by a single antenna. The connection unit 208 and the public network connection unit 211 do not necessarily need to be configured by independent hardware, but may be both realized by a single antenna.

### <Processing When Distribution Moving Image Size of Imaging Apparatus 100 is Changed During Use of UVC Function>

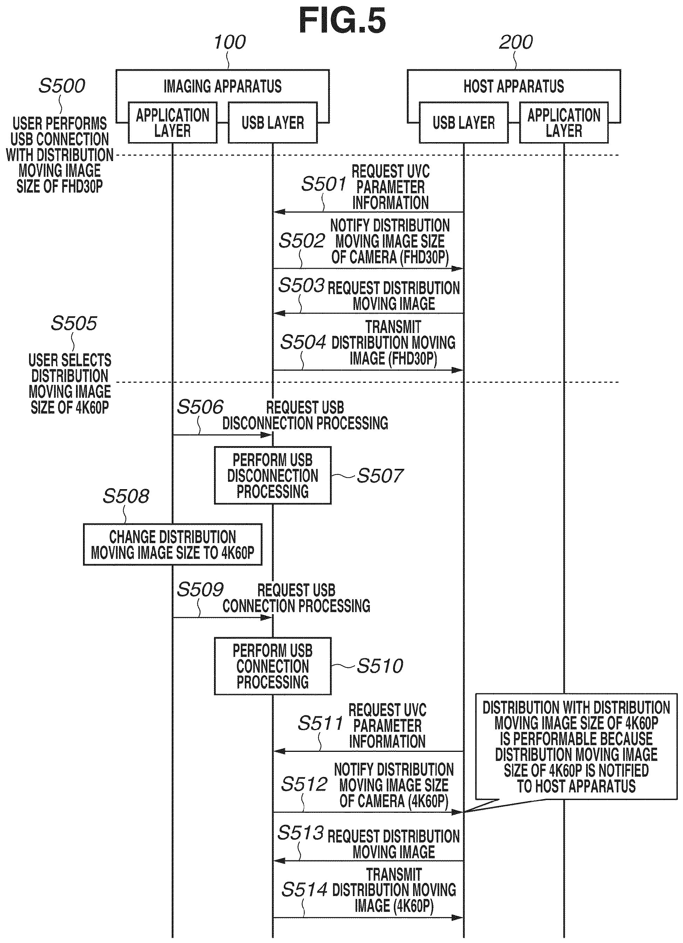

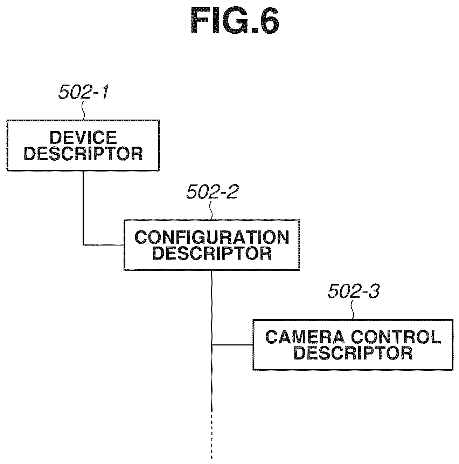

Fig. 5 is a sequence diagram illustrating processing when the distribution moving image size of the imaging apparatus is changed during use of a UVC function, by the imaging system according to the present embodiment. Fig. 6 is a schematic diagram illustrating a descriptor transmitted from the imaging apparatus 100 to the host apparatus 200. A case where, after the imaging apparatus 100 and the host apparatus 200 are USB-connected through wired connection, setting of the distribution moving image size of the imaging apparatus 100 is changed, for example, from FHD30P to 4K60P is described.

In step S500, the connection unit 108 of the imaging apparatus 100 and the connection unit 208 of the host apparatus 200 are connected by a USB cable. In the imaging apparatus 100, the distribution moving image size is set to FHD30P. When the imaging apparatus 100 and the host apparatus 200 are connected by the USB cable, the imaging apparatus 100 transmits a descriptor in which apparatus information is described, to the host apparatus 200, which enables the operating system operating on the host apparatus 200 to recognize the imaging apparatus 100. In the present embodiment, the host apparatus 200 recognizes that the imaging apparatus 100 is an apparatus operating based on UVC, by referring to the descriptor received from the imaging apparatus 100.

In step S501, enumeration is performed when the imaging apparatus 100 and the host apparatus 200 are USB-connected through wired connection, and the control unit 201 of the host apparatus 200 requests the imaging apparatus 100 to transmit a descriptor. In the present embodiment, the descriptor received by the host apparatus 200 includes information on the distribution moving image size of a moving image transmitted from the imaging apparatus 100 by the UVC function.

In step S502, the imaging apparatus 100 receives the descriptor request from the host apparatus 200 transmitted in step S501, and the first transmission control unit 111 of the control unit 101 transmits a descriptor to the host apparatus 200 from the connection unit 108 through the USB cable. The descriptor transmitted from the imaging apparatus 100 to the host apparatus 200 include a plurality of descriptors such as a device descriptor 502-1, a configuration descriptor 502-2, and a camera control descriptor 502-3.

In the device descriptor 502-1, general information on the USB device such as a USB standard supported by the USB device and a serial number is described. In the configuration descriptor 502-2, information on supply power from a bus necessary for the USB device, and information on a USB class used by the USB device is described. In the present embodiment, the distribution moving image size of the moving image transmitted when the imaging apparatus 100 uses the UVC function is described in the configuration descriptor 502-2. In the camera control descriptor 502-3, information necessary for the host apparatus 200 to issue a change instruction to the imaging apparatus 100 as camera control during use of the UVC function is described.

In step S503, the control unit 201 of the host apparatus 200 requests the imaging apparatus 100 to transmit a distribution moving image based on the information on the distribution moving image size received in step S502.

In step S504, in response to the distribution moving image request transmitted from the host apparatus 200 in step S503, the second transmission control unit 112 of the control unit 101 in the imaging apparatus 100 transmits a distribution moving image of FHD30P to the host apparatus 200.

In step S505, in a state where the UVC function is used, the user performs operation to change the setting of the distribution moving image size of the imaging apparatus 100 from FHD30P to 4K60P through the operation unit 105.

In step S506, in response to change of the setting of the distribution moving image size of the imaging apparatus 100 by user operation in step S505, an application layer of the imaging apparatus 100 requests a USB layer of the imaging apparatus 100 to perform USB controller disconnection control.

In step S507, the USB layer of the imaging apparatus 100 receives the request of physical communication disconnection of the USB controller. When the USB layer receives the disconnection request of the USB communication with the host apparatus 200, the disconnection processing unit 113 of the control unit 101 performs USB communication disconnection processing in the state where the connection unit 108 of the imaging apparatus 100 and the connection unit 208 of the host apparatus 200 are wired-connected by the USB cable. More specifically, the disconnection processing unit 113 sets both a signal line D+ and a signal line D- of the USB connector to a low voltage. As a result, the USB communication of the imaging apparatus 100 with the host apparatus 200 is disconnected.

In step S508, in response to the instruction to change the distribution moving image size by the user operation in step S505, in the application layer of the imaging apparatus 100, the changing unit 114 of the control unit 101 performs processing for changing the setting of the distribution moving image size from FHD30P to 4K60P. In step S508, in addition to setting change of the distribution moving image size of the imaging apparatus 100, description of the distribution moving image size included in the configuration descriptor 302-2 transmitted to the host apparatus 200 is changed from FHD30P to 4K60P.

In step S509, the processing for changing the setting of the distribution moving image size is completed, and the application layer of the imaging apparatus 100 requests the USB layer of the imaging apparatus 100 to perform USB controller connection control.

In step S510, the USB layer of the imaging apparatus 100 receives the USB connection processing request from the application layer of the imaging apparatus 100 transmitted in step S509. When the USB layer of the imaging apparatus 100 receives the USB connection processing request, the connection processing unit 115 of the control unit 101 performs connection processing to enable communication with the host apparatus 200 in the state where the imaging apparatus 100 and the host apparatus 200 are wired-connected by the USB cable. More specifically, the connection processing unit 115 sets the signal line D+ of the USB connector to a high voltage, and sets the signal line D- to a low voltage. As a result, the USB communication with the host apparatus 200 is put into a connected state. In the present embodiment, the USB connection with the host apparatus 200 can be performed without reconnection of the USB cable, and enumeration processing can be performed.

In step S511, in response to execution of the USB connection processing in step S510, the enumeration processing is performed between the imaging apparatus 100 and the host apparatus 200. The control unit 201 of the host apparatus 200 requests the imaging apparatus 100 to transmit a descriptor. Description of a descriptor transmitted by the imaging apparatus 100 in step S512 described below includes information on the distribution moving image size (4K60P) changed in step S505. Therefore, the host apparatus 200 can receive a distribution moving image of the changed distribution moving image size.

In step S512, the imaging apparatus 100 receives the descriptor request transmitted in step S511, and the first transmission control unit 111 of the control unit 101 transmits a descriptor including the information on the changed distribution moving image size (4K60P) to the host apparatus 200.

In step S513, as in step S503, the control unit 201 of the host apparatus 200 requests the imaging apparatus 100 to transmit a distribution moving image based on the information on the distribution moving image size received in step S512.

In step S514, as in step S504, in response to the distribution moving request from the host apparatus 200 in step S513, the second transmission control unit 112 of the control unit 101 in the imaging apparatus 100 transmits a distribution moving image of 4K60P to the host apparatus 200.

### <Processing by Imaging Apparatus 100 When Distribution Moving Image Size is Changed>

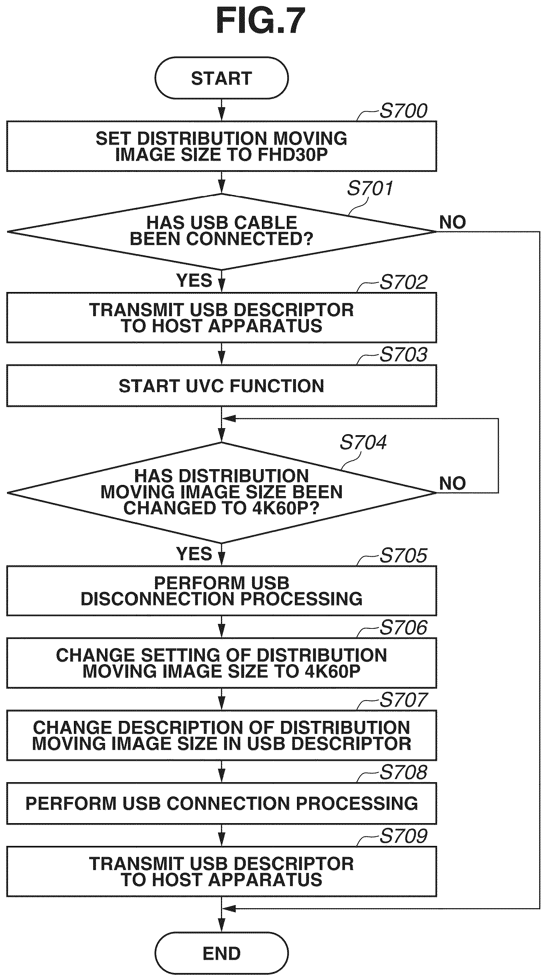

Fig. 7 is a flowchart illustrating processing by the imaging apparatus 100 when the imaging apparatus 100 and the host apparatus 200 are connected by the USB, and the distribution moving image size of the imaging apparatus 100 is changed during use of the UVC function.

In step S700, the user sets the distribution moving image size of the imaging apparatus 100 when the imaging apparatus 100 and the host apparatus 200 are connected by the USB and the UVC function is used, to FHD30P.

In step S701, the control unit 101 determines whether the USB cable has been connected to the connection unit 108 of the imaging apparatus 100. In a case where it is determined that the USB cable has been connected (YES in step S701), processing in and after step S702 described below is performed in order to use the UVC function. In a case where it is determined that the USB cable has not been connected (NO in step S701), no processing is performed.

In step S702, the imaging apparatus 100 and the host apparatus 200 are connected by the USB because the USB cable is connected in step S701, and the first transmission control unit 111 of the control unit 101 transmits the descriptor illustrated in Fig. 6 to the host apparatus 200.

In step S703, in response to USB connection of the imaging apparatus 100 with the host apparatus 200 in step S702, the second transmission control unit 112 of the control unit 101 transmits a distribution moving image of FHD30P to the host apparatus 200. The UVC function is started between the imaging apparatus 100 and the host apparatus 200.

In step S704, in the state where the imaging apparatus 100 and the host apparatus 200 are connected by the USB, and the UVC function is used, the control unit 101 determines whether the setting of the distribution moving image size of the imaging apparatus 100 has been changed by user operation. In a case where it is determined that the setting of the distribution moving image size of the imaging apparatus 100 has been changed (YES in step S704), processing in step S705 described below is performed. In a case where it is determined that the setting has not been changed (NO in step S704), the processing returns to step S704.

Since it is determined in step S704 that setting of the distribution moving image size of the imaging apparatus 100 has been changed in the state where the UVC function is used, it is necessary to perform reconnection of the USB communication with the host apparatus 200. Therefore, in step S705, the disconnection processing unit 113 of the control unit 101 performs the USB communication disconnection processing in the state where the imaging apparatus 100 and the host apparatus 200 are wired-connected by the USB cable. As a result, the USB communication between the imaging apparatus 100 and the host apparatus 200 is disconnected.

In step S706, since it is determined in step S704 that the setting of the distribution moving image size of the imaging apparatus 100 has been changed, the changing unit 114 of the control unit 101 changes the setting of the distribution moving image size from FHD30P to 4K60P.

In step S707, the control unit 101 rewrites description of the distribution moving image size in the descriptor to be transmitted from the imaging apparatus 100 to the host apparatus 200 at USB reconnection, with information on the distribution moving image size changed in step S706.

In step S708, the connection processing unit 115 of the control unit 101 performs the USB communication connection processing between the imaging apparatus 100 and the host apparatus 200 in the state where the imaging apparatus 100 and the host apparatus 200 are wired-connected by the USB cable. As a result, the imaging apparatus 100 and the host apparatus 200 are connected by the USB.

In step S709, enumeration is performed because the imaging apparatus 100 is connected to the host apparatus 200 by the USB, and the first transmission control unit 111 of the control unit 101 transmits the descriptor including the information on the changed distribution moving image size to the host apparatus 200. At this time, the distribution moving image size described in the descriptor to be transmitted to the host apparatus 200 is set to 4K60P.

As described above, the present embodiment realizes the imaging apparatus 100 that can, when the setting of the distribution moving image size is changed, distribute a moving image of the changed distribution moving image size without requiring the user to attach/detach the USB cable and the like, thereby achieving excellent usability and high convenience. Further, the high-convenience imaging system including the host apparatus 200 connected to the imaging apparatus 100 by the USB cable is realized.

### (Second Embodiment)

A second embodiment describes an imaging system in which an imaging apparatus including an information processing apparatus and a host apparatus are connected by, for example, a USB cable as in the first embodiment; however, the second embodiment is different from the first embodiment in that a new function is performed when the USB connection with the host apparatus 200 is disconnected. In the present embodiment, components and the like similar to the components and the like according to the first embodiment are denoted by the same reference numerals, and description thereof is omitted.

### <Configuration of Control Unit 101>

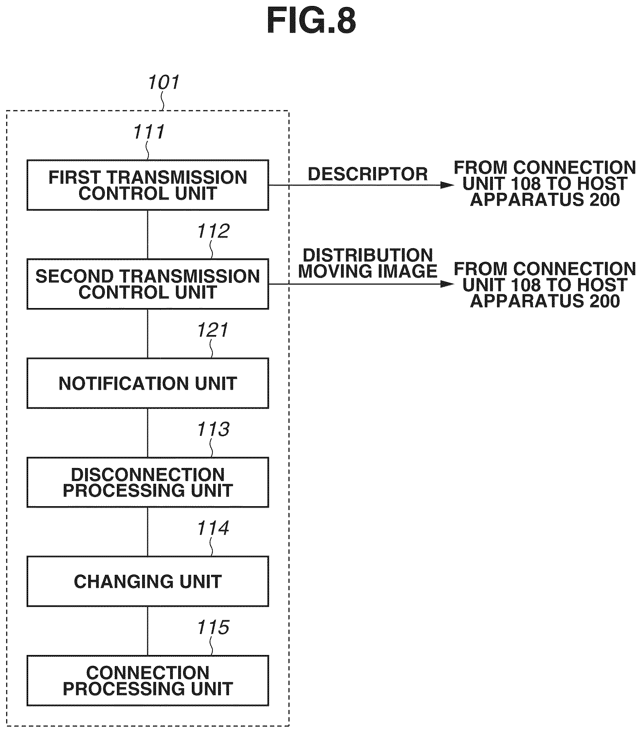

Fig. 8 is a schematic diagram illustrating a configuration and functions of the control unit 101 of the imaging apparatus 100 according to the present embodiment.

The control unit 101 includes a notification unit 121 in addition to the first transmission control unit 111, the second transmission control unit 112, the disconnection processing unit 113, the changing unit 114, and the connection processing unit 115. These units are realized by the CPU of the control unit 101. When the disconnection processing unit 113 receives an instruction from the application layer of the imaging apparatus 100, and performs processing for disconnecting the USB communication between the imaging apparatus 100 and the host apparatus 200 in the USB layer, the notification unit 121 notifies the user of execution of the disconnection processing by using the display unit 106.

### <USB Communication Disconnection Processing for Changing Distribution Moving Image Size>

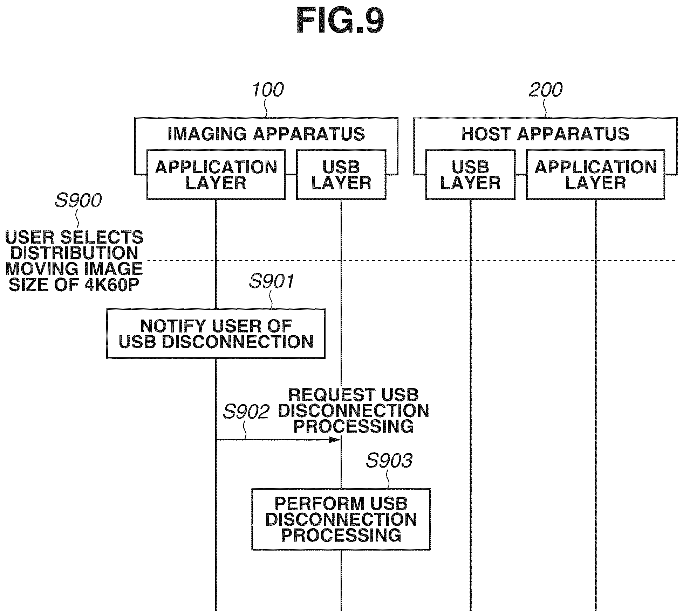

Fig. 9 is a sequence diagram illustrating the USB communication disconnection processing by the imaging system according to the present embodiment. Fig. 9 illustrates steps S900 to S903 that are parts of the USB communication disconnection processing. In the present embodiment, the processing in steps S500 to S504 illustrated in Fig. 5 is performed before the processing in step S900, and the processing in steps S508 to S514 illustrated in Fig. 5 is performed after the processing in step S903 in a manner similar to the first embodiment.

In step S900, in the state where the UVC function is used, the user performs operation to change the setting of the distribution moving image size of the imaging apparatus 100 from FHD30P to 4K60P through the operation unit 105.

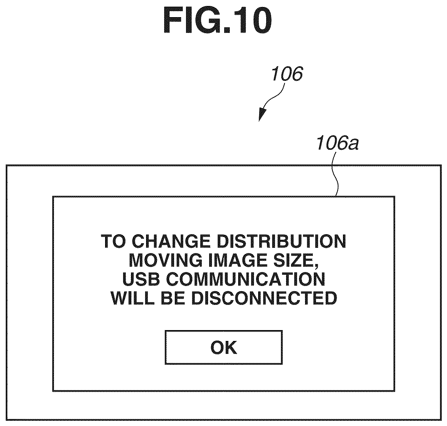

In step S901, in response to the operation to change the setting of the distribution moving image size in step S900, the notification unit 121 of the control unit 101 notifies the user that the USB connection with the host apparatus 200 is disconnected, by using the display unit 106. For example, as illustrated in Fig. 10, the notification from the notification unit 121 is displayed on a display screen 106a of the display unit 106. This enables the user to confirm that the user has performed the operation to change the setting of the distribution moving image size.

In step S902, after the user presses an "OK" button on the display screen 106a of the display unit 106, the application layer of the imaging apparatus 100 requests the USB layer of the imaging apparatus 100 to perform USB controller disconnection control.

In step S903, upon receiving the USB communication disconnection request in step S902, the disconnection processing unit 113 of the control unit 101 performs USB communication disconnection processing in the state where the connection unit 108 of the imaging apparatus 100 and the connection unit 208 of the host apparatus 200 are wired-connected by the USB cable. More specifically, the disconnection processing unit 113 sets both the signal line D+ and the signal line D- of the USB connector to a low voltage. As a result, the USB communication with the host apparatus 200 is disconnected.

The present embodiment realizes the imaging apparatus 100 that can, when the setting of the distribution moving image size is changed, distribute a moving image of the changed distribution moving image size without requiring the user to attach/detach the USB cable and the like, thereby achieving excellent usability and high convenience. Further, since disconnection of the USB communication is notified to the user, the user can confirm own intention of changing the distribution moving image size. Furthermore, the high-convenience imaging system including the host apparatus 200 connected to the imaging apparatus 100 by the USB cable is realized.

### (Other Embodiments)

In the above-described various embodiments, computer programs for controlling the imaging apparatus 100 are stored in the storage medium such as the nonvolatile memory 103. The computer programs are programs for realizing various functions of the control unit 101 (including first transmission control unit 111, second transmission control unit 112, disconnection processing unit 113, changing unit 114, connection processing unit 115, and notification unit 121) and the like of the imaging apparatus 100. More specifically, the programs correspond to steps S501 to S514 illustrated in Fig. 5, steps S901 to S903 illustrated in Fig. 9, and the like. The CPU of the control unit 101 serves as a computer, and reads out the computer programs from the storage medium such as the nonvolatile memory 103 and executes the computer programs. Thus, the control unit 101 controls the imaging apparatus 100.

Although the various preferred embodiments of the present disclosure are described above, the present disclosure is not limited to the embodiments, and can be variously modified and changed within the scope of the gist of the present disclosure.

Disclosure of the various embodiments includes the following configurations, method, and program.

### (Configuration 1)

There is provided an information processing apparatus, comprising:
a connection unit configured to establish communicable connection with an external apparatus through a wired connection;
a disconnection processing unit configured to, in response to a moving image size changing instruction, perform processing for disconnecting communication with the external apparatus in a state where the connection unit and the external apparatus are wired-connected;
a changing unit configured to change a moving image size based on the moving image size changing instruction; and
a connection processing unit configured to perform connection processing to communicate with the external apparatus in the state where the connection unit and the external apparatus are wired-connected.

### (Configuration 2)

There is provided the information processing apparatus according to configuration 1, further comprising a first transmission control unit configured to control transmission of a descriptor to the external apparatus in response to a descriptor transmission request received from the external apparatus.

### (Configuration 3)

There is provided the information processing apparatus according to configuration 2, wherein the descriptor includes information on a moving image size of a distribution moving image.

### (Configuration 4)

There is provided the information processing apparatus according to any one of configurations 1 to 3, further comprising a second transmission control unit configured to control transmission of a distribution moving image to the external apparatus in response to a distribution moving image transmission request received from the external apparatus.

### (Configuration 5)

There is provided the information processing apparatus according to any one of configurations 1 to 4, further comprising a notification unit configured to notify execution of the disconnection processing when the disconnection processing unit performs the disconnection processing in response to the instruction.

### (Configuration 6)

There is provided the information processing apparatus according to any one of configurations 1 to 5, wherein a universal serial bus (USB) standard is used for the wired connection.

### (Configuration 7)

There is provided the information processing apparatus according to any one of configurations 1 to 6, further comprising:
an imaging unit configured to capture an image; and
a display unit configured to display a captured image.

### (Method 1)

There is provided an information processing method using an information processing apparatus, the information processing method comprising:
performing, in response to a moving image size changing instruction, processing for disconnecting communication of the information processing apparatus with an external apparatus in a state where the information processing apparatus and the external apparatus are wired-connected;
changing a moving image size based on the instruction; and
performing connection processing to communicate with the external apparatus in the state where the information processing apparatus and the external apparatus are wired-connected.

### (Program 1)

There is provided a computer program comprising instructions which, when executed by a computer of an information processing apparatus, cause the information processing apparatus to perform the method according to Method 1.

### (Storage medium 1)

There is provided a computer-readable storage medium having stored thereon the program of Program 1

The embodiments of the present disclosure realize the information processing apparatus that can, when the setting of the moving image size is changed, distribute a moving image of the changed moving image size without requiring the user to attach/detach the cable, thereby achieving excellent usability and high convenience.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. An information processing apparatus (101), comprising:
connection means (108) configured to establish communicable connection with an external apparatus through a wired connection;
disconnection processing means (113) configured to, in response to a moving image size changing instruction, perform processing for disconnecting communication with the external apparatus in a state where the connection means (108) and the external apparatus are wired-connected;
changing means (114) configured to change a moving image size based on the moving image size changing instruction; and
connection processing means (115) configured to perform connection processing to communicate with the external apparatus in the state where the connection means (108) and the external apparatus are wired-connected.

2. The information processing apparatus according to claim 1, further comprising first transmission control means (111) configured to control transmission of a descriptor to the external apparatus in response to a descriptor transmission request received from the external apparatus.

3. The information processing apparatus according to claim 2, wherein the descriptor includes information on a moving image size of a distribution moving image.

4. The information processing apparatus according to claim 1, further comprising second transmission control means (112) configured to control transmission of a distribution moving image to the external apparatus in response to a distribution moving image transmission request received from the external apparatus.

5. The information processing apparatus according to claim 1, further comprising notification means configured to notify execution of the disconnection processing when the disconnection processing means (113) performs the disconnection processing in response to the instruction.

6. The information processing apparatus according to claim 1, wherein a universal serial bus, USB, standard is used for the wired connection.

7. The information processing apparatus according to claim 1, further comprising:
imaging means configured to capture an image; and
display means configured to display a captured image.

8. An information processing method using an information processing apparatus, the information processing method comprising:
performing, in response to a moving image size changing instruction, processing for disconnecting communication of the information processing apparatus with an external apparatus in a state where the information processing apparatus and the external apparatus are wired-connected;
changing a moving image size based on the instruction; and
performing connection processing to communicate with the external apparatus in the state where the information processing apparatus and the external apparatus are wired-connected.

9. A computer program comprising instructions which, when executed by a computer of an information processing apparatus, cause the information processing apparatus to perform the method according to claim 8.

10. A computer-readable storage medium having stored thereon the program of claim 9.
